# EUROPEAN PATENT APPLICATION

(11) **EP 2 056 141 A1**
(43) Date of publication of application: **06.05.2009**
(21) Application number: 08161311.9
(22) Date of filing: 29.07.2008
(51) Int. Cl.: G02B 6/34, G02B 6/35, H04Q 11/00, H04J 14/02

(54) **Wavelength selective switch**

(30) Priority: 01.11.2007 KR 20070111014
(71) Applicant: Electronics and Telecommunications Research Institute, Daejeon-city 305-350 (KR)
(72) Inventor: Kwon, Oh Kee, Daejeon-city (KR); Baek, Yongsoon, Daejeon-city (KR); Lee, Dong Hun, Daejeon-city (KR); Lee, Chul Wook, Daejeon-city (KR); Sim, Eundeok, Daejeon-city (KR); Kim, Jonghoi, Daejeon-city (KR)
(74) Representative: Betten & Resch

(57) **Abstract**

A wavelength selective switch is provided. The wavelength selective switch according to the present invention comprises: an optical demultiplexer for separating an incident light with a plurality of wavelengths multiplexed into a plurality of wavelength lights and outputting the separated wavelength lights; an optical amplifier for selectively amplifying or absorbing the separated wavelength lights; an optical deflector for selectively deflecting outputs of the optical amplifier; and an optical multiplexer for multiplexing the selectively deflected lights and outputting the multiplexed lights.

## Description

### CROSS-REFERENCE TO RELATED PATENT APPLICATION

This application claims the benefit of Korean Patent Application No. 10-2007-0111014, filed on November 1, 2007, in the Korean Intellectual Property Office, the disclosure of which is incorporated herein in its entirety by reference.

### BACKGROUND OF THE INVENTION

### 1. Field of the Invention

The present invention relates to a wavelength selective switch (WSS), and more particularly, to a WSS which is capable of electrically selecting or switching a wavelength without any physical displacement.

This work was partly supported by the IT R&D program of MIC/IITA [2007-S-011-01, Development of Optical Switches for ROADM].

### 2. Description of the Related Art

Initially, a wavelength division multiplexing (WDM) transmission system was used as a point-to-point transmission apparatus for connecting high-capacity nodes together. However, as the application areas of WDM transmission systems have been expanded and diversified, an optical add-drop multiplexing (OADM) technology capable of adding/dropping one or more wavelengths in each node is further required. An OADM has a structure of input/output ports and wavelength-add/drop ports where a plurality of wavelengths are multiplexed. Thus, an OADM is used in connecting intermediate nodes in a transmission path in units of wavelengths to expand the network connectivity and to increase efficiency. In an early OADM network, an F-OADM (fixed OADM) was adopted which is capable of adding/dropping only fixed wavelengths. In the network employing the F-OADM, network resources are wasted since a number of wavelengths are not used in an actual traffic transmission. Therefore, in the application of the F-OADM, the traffic needs to be predicted before the network is established and add/drop wavelengths need to be designed to be suitable for the prediction. Moreover, when a new wavelength is assigned, operating expenditures (opex) increase and a node connection status cannot be checked in real-time.

Reconfigurable OADM (R-OADM) has been cited as an alternative technology for overcoming the limitations of the F-OADM since the early stages of WDM. R-OADM is reconfigurable by freely adding/dropping wavelengths of a node in a remote location and efficiently reconstructing the wavelength connection status of the entire network, thereby flexibly coping with a change in the traffic situation. Therefore, the maintenance costs (opex) can be reduced. In this regard, R-OADM has been regarded as an alternative technology for reducing capital expenditures (capex) for initial equipment purchase of the network, which reaches a limit at present.

R-OADM can be largely classified as a broadcast and select system or a switch-based system. The broadcast and select system uses a dynamic channel equalizer (DCE) or a wavelength blocker (WB). Specifically, since the DCE-based system has less loss in a transmission path, compared to the switch-based system, a plurality of nodes can be accommodated in the DCE-based system.

The switch-based R-OADM has defects of difficulty to be realized in a system using a full matrix and of a big volume. It is also expensive. Moreover, when the R-OADM uses a 2x2 switch, the number of pairs of transmitter/receiver needs to be as many as the number of used wavelengths, or a full matrix switch needs to be further added to an add/drop path. However, the R-OADM of the switch-based system has the advantage of mass-production and low expense of a multiplexer (MUX)/a demultiplexer (DeMUX), variable optical attenuator (VOA), and an integrated planar lightwave circuit (iPLC) structure formed by combining the 2x2 or 1x2 switches, as the PLC technology using a silicon substrate is developed.

Another form of the switch-based system uses a WSS, whereby input/output between nodes can be freely selected. Thus, this form has the highest flexibility among the systems. A R-OADM switch using a WSS has been developed using an micro electromechanical system (MEMS) or a liquid crystal (LC) and can be in the form of a two-dimensional system or a three-dimensional system.

A conventional WSS structure based on the 3D MEMS is disclosed in US Patent No. 6,625,346, US Patent No. 7,236,660, etc. Another waveguide structure is disclosed in US Patent No. 6,389,199.

### SUMMARY OF THE INVENTION

The present invention provides a non-displaceable wavelength selective switch (WSS) which is capable of switching without any physical displacement and makes a bulk-type optical component unit as a 2D hybrid or monolithic integration, to simplify operation and configuration thereof.

According to an aspect of the present invention, there is provided a wavelength selective switch comprising: an optical demultiplexer for separating an incident light with a plurality of wavelengths multiplexed into a plurality of wavelength lights and outputting the separated wavelength lights; an optical amplifier for selectively amplifying or absorbing the separated wavelength lights; an optical deflector for selectively deflecting outputs of the optical amplifier; and an optical multiplexer for multiplexing the selectively deflected lights and outputting the multiplexed lights

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a wavelength selective switch (WSS), according to an embodiment of the present invention;
FIG. 2 illustrates an 1xN WSS structure, according to an embodiment of the present invention; and
FIG. 3 illustrates a monolithically integrated 1xN WSS structure based on an InP, according to an embodiment of the present invention.

### DETAILED DESCRIPTION OF THE INVENTION

The present invention will now be described more fully hereinafter with reference to the accompanying drawings, in which preferred embodiments of the invention are shown.

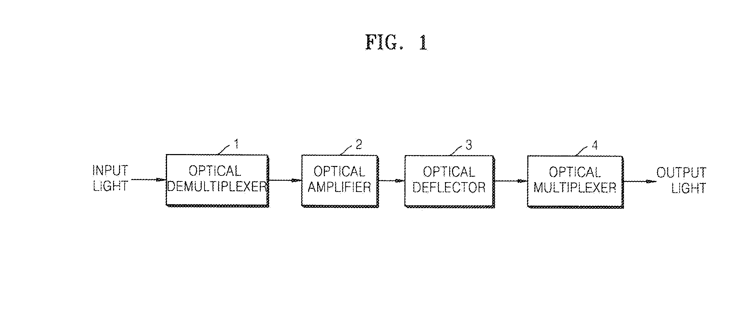

FIG. 1 is a block diagram of a wavelength selective switch (WSS), according to an embodiment of the present invention. Referring to FIG. 1, the WSS comprises an optical demultiplexer 1, an optical amplifier 2, an optical deflector 3, and an optical multiplexer 4.

The optical demultiplexer 1 separates an incident light into a plurality of wavelength signals. The optical amplifier 2 amplifies or absorbs the separated wavelength signals, respectively. The optical deflector 3 controls an angle of deflection of the light output by the optical amplifier 2 and changes an orientation of the light. The optical multiplexer 4 multiplexes the plurality of signals.

According to an embodiment of the present invention, the optical demultiplexer 1 or the optical multiplexer 4 may use an arrayed waveguide grating (AWG) or concave grating (CG).

An AWG uniformly changes the phases of waveguide modes with respect to a plurality of optical signal wavelengths so that the corresponding wavelength is selected to reach a specific position through a change of a radiation angle or angular dispersion. This is called linear dispersion.

A CG diffracts an incident beam for each wavelength in a periodic grating structure to change the phase of the incident beam by a concave structure so that the phase of the incident beam is focused in an output direction, to obtain the angular dispersion and linear dispersion.

In the current embodiment of the present invention, the optical amplifier 2 is an SOA (semiconductor optical amplifier) manufactured as a semiconductor device. The optical amplifier of the optical semiconductor device obtains an optical gain from a semiconductor medium by a current injection and amplifies or attenuates the incident beam. In the optical amplifier, a gain medium, that is, an active layer is grown on a substrate formed of generally GaAs, InP, or sapphire, and the material composition of the substrate and the active layer may vary according to an operating wavelength.

According to the current embodiment of the present invention, the SOA operates in a C-band (1530 to 1570 nm ) or in an L-band (1570 to 1612 nm).

Accordingly, the active layer of an InGaAsP or InGaAs material is grown on the InP substrate.

As a core element for selecting a wavelength, the optical deflector 3 performs a variable prism function with respect to the current injection in an optical waveguide structure. Since the optical deflector 3 is implemented in an integrated form within an free propagation region (FPR) of the AWG or a slab optical waveguide of the CG, its pattern needs to be designed to generate optical deflection of a radiated beam. However, in the AWG including the optical deflector in a triangular shape or any shape, the phase of the radiated beam may be adjusted by additionally modifying the phase of deflected signals by partially changing the waveguide structure through, for example, etching or re-growing and the like, on a part of the FPR, or by additionally inserting a structure which is capable of controlling the phase into the waveguide array positioned between two FPRs. Furthermore, in the CG including the optical deflector in any shape, deflective characteristics may be partially changed by partially etching a part of the slab waveguide or controlling a pitch of the grating. Therefore, the pattern of the optical deflector in the current embodiment of the present invention may be embodied in the structure to deflect the light by changing a refractive index of the waveguide by voltage application in addition to the current injection.

As described above, to realize the WSS, the SOA is required as a tunable switch which employs the optical deflector 3 in the AWG or CG, and a variable optical attenuator (VOA) to amplify or attenuate a specific channel signal.

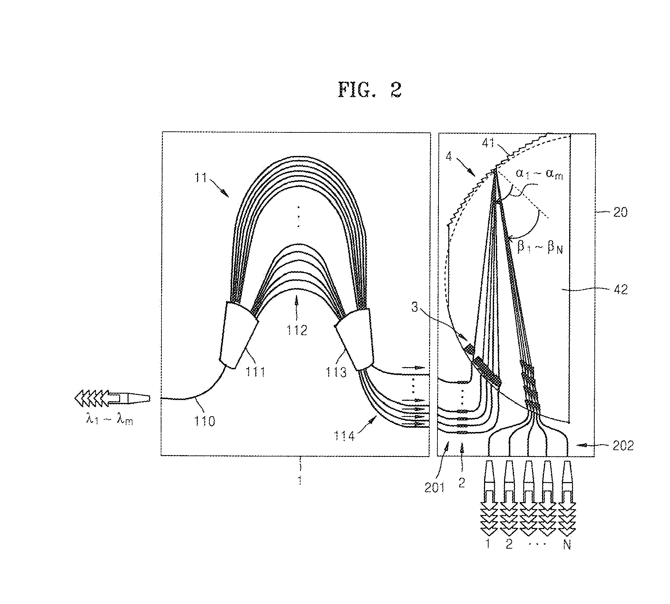

FIG. 2 illustrates a 1xN WSS structure according to an embodiment of the present invention. In FIG. 2, the same numbers as those used in FIG. 1 refer to the same elements. Reference numeral 11 indicates a silica AWG used as an optical demultiplexer 1 and reference numeral 20 indicates an InP CG chip.

The AWG 11 comprises an input waveguide 110 of a single channel, a first FPR 111, a waveguide array 112, a second FPR 113, and an output waveguide 114 of a plurality of channels and separates an input single channel into a plurality of channels. Since the technology of the AWG 11 having the above-described structure is well known to those skilled in the art, a detailed description thereof will not be provided herein.

The CG chip 20 comprises an input waveguide 201, an optical amplifier 2, an optical deflector 3, a CG 4 as an optical multiplexer, and an output waveguide 202. The CG 4 further comprises a grating 41 and a slab waveguide 42.

In the structure as illustrated in FIG. 2, the AWG 11 and the CG 20 are realized by hybrid integration.

In general, a silica-based AWG is a very stable device with respect to manufacturability and characteristics, but it cannot be used in the manufacture of an optical active device such as the SOA. In the current embodiment of the present invention, the AWG 11 demultiplexes an input optical signal.

The signals demultiplexed into corresponding channels by the AWG 11 are transferred to the input waveguide 201 of the CG chip 20 from the output waveguide of the AWG 11, and the SOA 2 performs the function of the VOA.

The optical deflector 3 is embodied on a plane of optical incidence of the CG 4 to transfer the incident light from the SOA 2 to the grating 41 through the slab waveguide 42. When a current is not supplied, the optical deflector 3 concentrates the light of each channel to any single point of the grating 41 and the grating 41 outputs the concentrated lights as a single beam to any one channel of the output waveguide 202.

When a current is supplied to the optical deflector 3, the light of each cannel is deflected to be incident on the grating 41 at a different incident angle and is radiated by the grating 41 so as to be output to each different channel of the output waveguide 202.

A dotted line portion in FIG. 2 indicates a Rowland circle-based CG for convenience. Then, a trace in a straight line, oval, or any shape is possible according to the pitch of the grating 41.

The optical deflector 3 comprises an m deflector array having a plurality of deflectors. Each deflector is independently operated. When no current is injected, the grating 41 is designed to have the same angle of diffraction β ₁ with respect to the wavelengths (λ ₁ to λ ₘ) and the incident angles (α ₁ to α ₘ) of the incident beam of each channel, and to multiplex a plurality of wavelengths being incident. When an electrical signal is applied to the optical deflector 3, the incident angles of each of the corresponding channels are changed by refractive index changes within the deflection pattern, and more specifically, by refractive index reductions. Therefore, it is critical to design the grating 41 so that a diffraction angle moves within a range of β ₁ to β _{N} with respect to an incident angle change.

In order to increase the number of channels N of the output waveguide 202 in the structure of the CG 4, the structure may be designed to generate a relatively large change in the refractive index with respect to the same current injection into the optical deflector 3 or to have a pattern for generating a relatively large beam deflection with respect to the same change in the refractive index.

In order to increase variation in the refractive index, a core where the light traverses in the waveguide may be manufactured of a material with a band gap wavelength being close to an operation wavelength, that is, a channel wavelength. In this case, however, since an optical loss may increase, the material needs to be selected considering the optical loss. The structure of a pattern in which a beam deflects greatly is to be designed so that the right and left of a deflection pattern are as asymmetric as possible with respect to a beam traverse direction. Furthermore, in order to increase a difference of the variation in the refractive index within the deflection pattern, namely a value relevant to a difference of phase variation of radiation beams, a position of the deflection pattern needs to be designed to be spaced, as far as possible, from an end of the input waveguide of the deflector array. However, since the position of the deflection pattern needs to be far enough for the radiation beams to be received, if designed to be spaced excessively far, the deflection pattern becomes large and thus, the spaces between the input waveguides of the deflector array nearby the slab waveguide 42 become large, so that the entire size of the CG 4 may increase.

In the above-designed or optimized waveguide structure and deflection pattern, a method of decreasing a grating radius of the grating 41 or reducing a grating order may be employed in order to additionally increase the number of channels of the output waveguides 202. However, this method is not preferable because it broadens a spectral passband of the CG 4. Thus, it is preferable to reduce the spaces between output waveguides on the Rowland circle in the designed structure of the CG 4, resulting that more output waveguides can be included to receive the light with respect to a predetermined diffraction angle change. Furthermore, the spaces between the output waveguides of the CG 4 may be arranged so as to be smaller than the spaces between the input waveguides of the CG 4, to enable broad switching at a narrow deflection angle.

The optical deflector 3 may be inserted into the FPRs 111 and 113 of the AWG 11 instead of the CG4. Furthermore, the AWG 11 or CG 4 may also be embodied with a polymer or SOI (silicon-on-insulator) material in addition to the silica material.

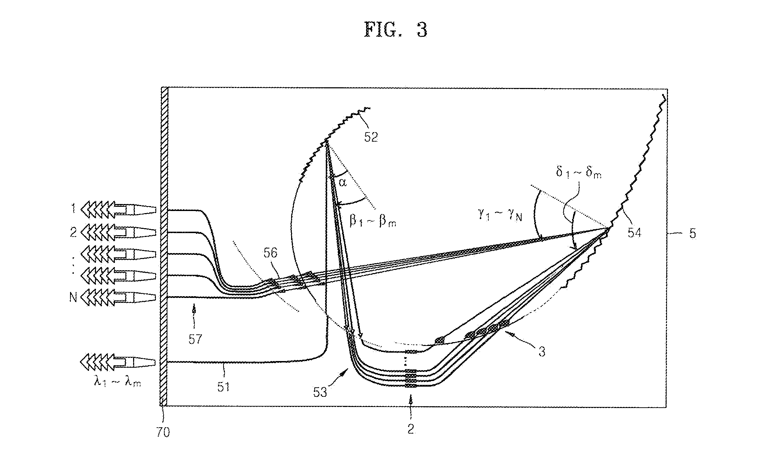

FIG. 3 illustrates a monolithically integrated 1xN WSS structure 5 based on InP, according to another embodiment of the present invention.

Referring to FIG. 3, the WSS structure 5 is with an input waveguide 51 and an output waveguide array 57 positioned on the same plane 70 which is anti-reflection-coated.

As illustrated in FIG. 3, an incident light of m different wavelengths multiplexed passes through the input waveguide 51 and is incident onto a first CG 52 with an incident angle α at the end of the input waveguide 51. In the first CG 52, m signals are transferred to a first output waveguide array 53 with diffraction angles β ₁ to β ₘ which corresponds to each channel wavelength. The first CG 52 and second CG 54 illustrated in FIG. 3 have the same structure as the CG 4 illustrated in FIG. 2 and operate in the same manner.

The SOA 2 amplifies or attenuates the light of each channel which is incident from the first output waveguide array 53. The optical deflector 3 is implemented in the second CG 54 and deflects the incident light so as to have incident angles δ ₁ to δ ₘ. A grating of the second CG 54 is designed to have a diffraction angle γ ₁ so as to output the incident light to a first output port 56 when the optical deflector 3 does not operate. As the optical deflector 3 operates, the incident light is deflected so as to have a diffraction angle γ ₁ to γ _{N} and to be output for each channel.

In this case, when an i-th channel wavelength is output, a light of the corresponding channel is obtained in the first output port 56 by turning on an i-th amplifier only. When the i-th channel wavelength is switched to another output port, a light of the corresponding channel is obtained at the other output port by injecting a current into an i-th deflector among the deflector array so that the i-th deflector deflects the incident light and changes the incident angle. The output port for each channel is connected to a corresponding channel of a second output waveguide array 57. A method for selectively switching a desired channel can be applied to the WSS illustrated in FIG. 2.

Accordingly, since the structure illustrated in FIG. 3 can be manufactured as a single chip, compared to the structure illustrated in FIG. 2, the time and cost required for the 2D hybrid integration are reduced, the size of the device is small, and the reliability is relatively high.

In the WSS according to the present invention, since the optical demultiplexer, optical amplifier, optical deflector and optical multiplexer can select the channel wavelength by the current injection to the optical amplifier array for an input optical signal of different channels and perform switching of the selected channel wavelength by applying an electric signal into the deflector, the higher reliability and smaller volume can be achieved, compared with the conventional bulk-type switching devices with physical displacement. Furthermore, in the WSS according to the present invention, since an optical component unit is two-dimensionally hybrid or monolithically integrated, an optical arrangement between the component units can be minimized or removed. In addition, the WSS according to the present invention is structurally stable and is capable of significantly increasing switching speed, compared with the conventional mechanical switching structure.

While optimum exemplary embodiments of the present invention have been particularly shown and described with reference to accompanying drawings thereof, the specific terms used herein are for the purpose of describing the invention and are not intended to define the meanings thereof or be limiting of the scope of the invention set forth in the claims. Therefore, it will be understood by those of ordinary skill in the art that various changes and equivalent embodiments in form and details may be made therein without departing from the spirit and scope of the present invention as defined by the claims. Furthermore, the scope of true technical protection of the present invention shall be defined by the technical idea of the following claims.

## Claims

1. A wavelength selective switch comprising:
an optical demultiplexer for separating an incident light with a plurality of wavelengths multiplexed into a plurality of wavelength lights and outputting the separated wavelength lights;
an optical amplifier for selectively amplifying or absorbing the separated wavelength lights;
an optical deflector for selectively deflecting outputs of the optical amplifier; and
an optical multiplexer for multiplexing the selectively deflected lights and outputting the multiplexed lights.

2. The wavelength selective switch of claims 1, wherein the optical multiplexer is a concave grating comprising:
a slab optical waveguide; and
a grating for diffracting incident lights transmitted through the slab optical waveguide to output the diffracted lights through the slab optical waveguide.

3. The wavelength selective switch of claim 2, wherein the optical deflector is positioned at a plane of incidence into which the incident light is incident, on the concave grating.

4. The wavelength selective switch of claim 3, wherein the optical deflector comprises a deflector array having a plurality of deflectors each of which determines to deflect the lights, depending on whether a current is supplied to.

5. The wavelength selective switch of one of claims 1 to 4, wherein the optical demultiplexer is an arrayed waveguide grating to be integrated on a first substrate, and the optical amplifier, optical deflector, and optical multiplexer are integrated on a second substrate.

6. The wavelength selective switch of claim 5, wherein the optical multiplexer is a concave grating comprising:
a slab optical waveguide; and
a grating for diffracting incident lights transmitted through the slab optical waveguide and for outputting the diffracted lights through the slab optical waveguide.

7. The wavelength selective switch of claim 6, wherein spaces between output optical waveguides of the concave grating are arranged so as to be smaller than spaces between input waveguides of the concave grating.

8. The wavelength selective switch of claim 6 or 7, wherein the optical deflector is positioned at a plane of incidence into which the incident light is incident on the concave grating.

9. The wavelength selective switch of claim 7, wherein the optical deflector comprises a deflector array having a plurality of deflectors each of which determines to deflect the lights, depending on whether a current is supplied to.

10. The wavelength selective switch of one of claims 1 to 9, wherein one of the optical demultiplexer, optical amplifier, optical deflector, and optical multiplexer is integrated on one substrate.

11. The wavelength selective switch of claim 10, wherein the optical demultiplexer is a first concave grating for diffracting the incident light to separate into a plurality of channels, and wherein the optical multiplexer is a second concave grating for diffracting the plurality of channels output from the optical amplifier to multiplex the diffracted lights to be output.

12. The wavelength selective switch of claim 11, wherein each of the first and second concave gratings comprises:
a slab optical waveguide; and
a grating for diffracting the incident lights transmitted through the slab optical waveguide and for outputting the diffracted lights through the slab optical waveguide.

13. The wavelength selective switch of claim 11 or 12, wherein spaces between output optical waveguides of the first or second concave grating are arranged so as to be smaller than spaces between input waveguides of the first or second concave grating.

14. The wavelength selective switch of claim 11, 12, or 13, wherein the multiplexed light incident into the optical demultiplexer and the lights being multiplexed and output by the optical multiplexer are input/output on a same plane on the substrate.

15. The wavelength selective switch of one of claims 10 to 14, wherein the optical deflector is positioned at a plane of incidence of the lights on the second concave grating.
